# EUROPEAN PATENT APPLICATION

(11) **EP 4 806 677 A1**
(43) Date of publication of application: **16.09.2026**
(21) Application number: 24887716.9
(22) Date of filing: 15.10.2024
(51) Int. Cl.: B60G 17/052, B60G 17/04, B01D 53/26, B01D 46/00

(54) **AIR SUSPENSION CONTROL SYSTEM AND CONTROL METHOD OF AIR SUSPENSION CONTROL SYSTEM**

(30) Priority: 08.11.2023 CN 202311478311
(71) Applicant: BIBO (ZHEJIANG) AUTOMOTIVE ELECTRONICS CO., LTD., Zhejiang 314500 (CN); Bibo (Hangzhou) Automotive Electronics Co., Ltd., Hangzhou, Zhejiang 311107 (CN)
(72) Inventor: LIU, Xiaohui, Beijing 100160 (CN); XIE, Zejin, Beijing 100160 (CN); YU, Liang, Beijing 100160 (CN); DU, Mingkai, Beijing 100160 (CN); LV, Biao, Beijing 100160 (CN); WANG, Boxiang, Beijing 100160 (CN); LI, Longkang, Beijing 100160 (CN); ZHANG, Jing, Beijing 100160 (CN); WANG, Chen, Beijing 100160 (CN)
(74) Representative: advotec.
(86) International application number: PCT/CN2024/124957
(87) International publication number: WO 2025/098103

(57) **Abstract**

An air suspension control system and a control method thereof. The air suspension control system comprises an air supply valve unit (100), an air filtering and drying device (200), an air storage tank (300), and a plurality of air springs (400). The air supply valve unit (100) is provided with a first vent port (101), a second vent port (102), and a plurality of third vent ports (103). The air filtering and drying device (200) is provided with an air intake/exhaust nozzle (201) and an air intake/exhaust hole (202). The air intake/exhaust nozzle (201) is in communication with the first vent port (101). The air storage tank (300) is in communication with the second vent port (102). The plurality of air springs (400) are connected to the plurality of third vent ports (103) in one-to-one correspondence.

## Description

### CROSS-REFERENCE TO RELATED APPLICATION

The present disclosure is based on and claims priority to Chinese Patent Application No. 202311478311.4, filed on November 08, 2023, the entire content of which is incorporated into the present invention by reference.

### FIELD

The present disclosure belongs to the field of vehicle air suspension, and particularly relates to an air suspension control system and a control method for an air suspension control system.

### BACKGROUND

With the continuous development of vehicle integration and intelligence, vehicle functions have become increasingly diverse. To deliver a more comfortable driving experience, a vehicle suspension product has continuously updated and iterated, gradually giving rise to an air suspension system with adjustable suspension height. Such system can adjust the vehicle body height according to driving conditions, greatly improving ride comfort and trafficability on a complex road condition. An air suspension system mainly includes an air spring and an air supply unit interconnected by a pneumatic pipeline. The air supply unit is configured to supply compressed air to the air suspension system, and the compressed air charges or discharges the air spring through switching of a specific valve, thereby actively altering the height or level of the vehicle body relative to the axle or the road surface. At present, a desiccant in the air supply unit is mostly arranged inside the air path of the air supply unit and at the rear end of an air pump. When air is drawn in the air supply unit, moist air cannot be dried before entering an air supply valve unit, leading to a risk of failure caused by water accumulation in the air pump and the valve body unit. In addition, the air supply unit is equipped with numerous external pipelines, which are difficult to install.

### SUMMARY

The present disclosure provides an air suspension control system and a control method for an air suspension control system. By integrating an intake pipeline and an exhaust pipeline of the air suspension control system into a single pipeline, the number of system pipelines is reduced, facilitating overall vehicle arrangement. Meanwhile, an air filtration dryer is arranged separately from an air supply valve unit and arranged at an intake-and-exhaust port end of the air supply valve unit, so that air is dried before entering the air supply valve unit, ensuring dryness inside the air suspension control system. Furthermore, the service life of the desiccant in the air filtration dryer can be prolonged by means of an air backflushing function.

In a first aspect, embodiments of the present disclosure propose an air suspension control system, including: an air supply valve unit, an air filtration dryer, an air storage tank, and a plurality of air springs, the air supply valve unit has a first air port, a second air port, and a plurality of third air ports, the air filtration dryer has an air intake-and-exhaust nozzle and an air intake-and-exhaust hole, the air intake-and-exhaust nozzle is in communication with the first air port, the air storage tank is in communication with the second air port, and the plurality of air springs are connected to the plurality of third air ports in a one-to-one correspondence; in response to the air suspension control system being in an air intake state, the first air port and the second air port are in communication with each other and the plurality of third air ports are closed by switching internal valves of the air supply valve unit, external air is drawn in through the air intake-and-exhaust hole of the air filtration dryer, filtered and dried by the air filtration dryer, and then compressed into the air storage tank through one or more air passage of the air supply valve unit to complete system air replenishment; in response to the air suspension control system being in a suspension lifting state, the second air port and the plurality of third air ports are in communication with each other and the first air port is closed by switching the internal valves of the air supply valve unit, so that air in the air storage tank is compressed into the plurality of air springs through the one or more air passage of the air supply valve unit to lift the plurality of air springs; in response to the air suspension control system being in a suspension lowering state, the second air port and the plurality of third air ports are in communication with each other and the first air port is closed by switching the internal valves of the air supply valve unit, so that air in the plurality of air springs is pumped into the air storage tank through the one or more air passage of the air supply valve unit to lower heights of the plurality of air springs; and in response to the air suspension control system being in an air exhaust state, the first air port and the plurality of third air ports are in communication with each other and the second air port is closed by switching the internal valves of the air supply valve unit, air in the plurality of air springs is discharged to an external environment through the air passage of the air supply valve unit and the air filtration dryer.

In some embodiments, the air supply valve unit includes an air supply valve group, a directional control valve group, a safety valve, an air exhaust valve, a sensor, and an air pump driven by a motor, and the plurality of air springs are connected to a first air line of the directional control valve group via the air supply valve group, the air storage tank is connected to a second air line of the directional control valve group, an air-intake end of the air pump is connected to a third air line of the directional control valve group, a fourth air line of the directional control valve group is respectively connected to an air-outlet end of the air pump, a first end of the safety valve and a first end of the air exhaust valve; the air intake-and-exhaust nozzle of the air filtration dryer is respectively connected to the air-intake end of the air pump, a second end of the safety valve, a second end of the air exhaust valve and the third air line of the directional control valve group; and the sensor is arranged at an end of the air supply valve group connected to the directional control valve group.

In some embodiments, the plurality of air springs include four air springs, and the air supply valve group includes a first air supply valve, a second air supply valve, a third air supply valve and a fourth air supply valve; a first end of the first air supply valve, a first end of the second air supply valve, a first end of the third air supply valve and a first end of the fourth air supply valve are respectively connected to the first air line of the directional control valve group; and a second end of the first air supply valve, a second end of the second air supply valve, a second end of the third air supply valve and a second end of the fourth air supply valve are respectively connected to the four air springs in a one-to-one correspondence.

In some embodiments, each of the first air supply valve, the second air supply valve, the third air supply valve and the fourth air supply valve is a two-position two-way solenoid valve.

In some embodiments, the directional control valve group includes a first directional control valve, a second directional control valve, a third directional control valve and a fourth directional control valve; the air storage tank is in communication with a first end of the first directional control valve and a first end of the second directional control valve; a second end of the first directional control valve is respectively in communication with the air-outlet end of the air pump, the first end of the safety valve and the first end of the air exhaust valve; a second end of the second directional control valve and a first end of the third directional control valve are respectively in communication with the air-intake end of the air pump, and are also respectively in communication with the air intake-and-exhaust nozzle of the air filtration dryer; a second end of the third directional control valve and a first end of the fourth directional control valve are respectively connected to the air supply valve group; and a second end of the fourth directional control valve is respectively in communication with the air-outlet end of the air pump, the first end of the safety valve and the first end of the air exhaust valve.

In some embodiments, each of the first directional control valve, the second directional control valve, the third directional control valve, and the fourth directional control valve is a two-position two-way solenoid valve.

In some embodiments, a one-way valve is arranged between the air filtration dryer and each of the air-intake end of the air pump, the second end of the safety valve, the second end of the second directional control valve, and the first end of the third directional control valve.

In some embodiments, the sensor is at least one of a pressure sensor or a temperature sensor.

In some embodiments, the air filtration dryer includes a silencing component, a filtration component and a drying component connected in sequence; and a silencing element is arranged inside the silencing component, the air intake-and-exhaust hole is arranged at an end of the silencing component facing away from the filtration component, a filter element is arranged inside the filtration component, a desiccant is arranged inside the drying component, and the air intake-and-exhaust nozzle is arranged at an end of the drying component facing away from the filtration component; external air drawn in through the air intake-and-exhaust hole sequentially passes through the silencing component, the filtration component and the drying component, and is then delivered to the air supply valve unit through the air intake-and-exhaust nozzle; air discharged from the air supply valve unit enters the air filtration dryer through the air intake-and-exhaust nozzle, sequentially passes through the drying component, the filtration component and the silencing component, and is then discharged to the external environment through the air intake-and-exhaust hole.

In some embodiments, a two-way valve is arranged between the silencing component and the filtration component, and when the air filtration dryer is in a non-operating state, the two-way valve blocks air communication between the silencing component and the filtration component; and when the air filtration dryer is in an air intake state, the two-way valve opens an air passage from the air intake-and-exhaust hole to the air intake-and-exhaust nozzle; and when the air filtration dryer is in an air exhaust state, the two-way valve opens an air passage from the air intake-and-exhaust nozzle to the air intake-and-exhaust hole.

In a second aspect, embodiments of the present disclosure propose a control method for an air suspension control system used in the air suspension control system according to the first aspect, and the control method for an air suspension control system includes: in response to the air suspension control system being in the air intake state, opening both air passages of a first directional control valve and a fourth directional control valve of the air supply valve unit, closing both air passages of a second directional control valve and a third directional control valve of the air supply valve unit, closing both air passages of an air exhaust valve and an air supply valve group of the air supply valve unit, and driving by a motor of the air supply valve unit an air pump to draw external air in through the intake-and-exhaust hole of the air filtration dryer, so that the external air is filtered and dried by the air filtration dryer and compressed into the air storage tank through the one or more air passages of the air supply valve unit to complete system air replenishment; in response to the air suspension control system being in the suspension lifting state, opening both the air passages of the second directional control valve and the fourth directional control valve of the air supply valve unit, closing both the air passages of the first directional control valve and the third directional control valve of the air supply valve unit, closing the air passage of the air exhaust valve of the air supply valve unit, opening all the air passages of the air supply valve group of the air supply valve unit, and driving by the motor the air pump to compress air in the air storage tank into the plurality of air springs through the one or more air passages of the air supply valve unit to lift the plurality of air springs; in response to the air suspension control system being in the suspension lowering state, opening both the air passages of the first directional control valve and the third directional control valve of the air supply valve unit, closing both the air passages of the second directional control valve and the fourth directional control valve of the air supply valve unit, closing the air passage of the air exhaust valve of the air supply valve unit, opening all the air passages of the air supply valve group of the air supply valve unit, and driving by the motor the air pump to pump air in the plurality of air springs into the air storage tank through the one or more air passages of the air supply valve unit to lower the heights of the plurality of air springs; and in response to the air suspension control system being in the air exhaust state, opening both the air passages of the third directional control valve and the fourth directional control valve of the air supply valve unit, closing both the air passages of the first directional control valve and the second directional control valve of the air supply valve unit, and opening both the air passages of the air exhaust valve and the air supply valve group of the air supply valve unit, so that air in the plurality of air springs is discharged to the external environment through the one or more air passages of the air supply valve unit and the air filtration dryer.

### BRIEF DESCRIPTION OF THE DRAWINGS

The accompanying drawings required for embodiments are described below. The drawings in the following description are some of embodiments related to the present disclosure. For those of ordinary skill in the art, other drawings may be obtained based on these drawings without inventive effort.
FIG. 1 is a schematic diagram of an air suspension control system in an air intake state according to an embodiment of the present disclosure;
FIG. 2 is a schematic diagram of an air suspension control system in a suspension lifting state according to an embodiment of the present disclosure;
FIG. 3 is a schematic diagram of an air suspension control system in a suspension lowering state according to an embodiment of the present disclosure;
FIG. 4 is a schematic diagram of an air suspension control system in an air exhaust state according to an embodiment of the present disclosure;
FIG. 5 is a structural schematic diagram of a two-way valve according to an embodiment of the present disclosure.

### Reference numerals:

100 air supply valve unit; 101 first air port; 102 second air port; 103 third air port;
110 air supply valve group; 111 first air supply valve; 112 second air supply valve; 113 third air supply valve; 114 fourth air supply valve;
120 directional control valve group; 121 first directional control valve; 122 second directional control valve; 123 third directional control valve; 124 fourth directional control valve;
1201 first air line; 1202 second air line; 1203 third air line; 1204 fourth air line;
130 safety valve; 140 air exhaust valve; 150 sensor; 160 motor; 170 air pump; 180 one-way valve;
200 air filtration dryer; 201 air intake-and-exhaust nozzle; 202 air intake-and-exhaust hole;
210 silencing component; 212 two-way valve; 220 filtration component; 230 drying component;
300 air storage tank; 400 air spring.

### DETAILED DESCRIPTION

Embodiments of the present disclosure are described below with reference to the accompanying drawings. The described embodiments are some embodiments related to the present disclosure. Based on embodiments of the present disclosure, all other embodiments obtained by those of ordinary skill in the art without inventive effort shall fall within the scope of protection of the present disclosure.

The terms "comprise (comprising)", "include (including)", "have (having)" and any variations thereof in embodiments and drawings of the present disclosure are intended to cover non-exclusive inclusion. For example, a process, a method, a system, a product or a device comprising a series of steps or units is not limited to the listed steps or units, but may optionally further include unlisted steps or units, or may optionally further include other steps or units inherent to such process, method, product or device.

An embodiment of the present disclosure discloses an air suspension control system. Detailed descriptions are provided respectively below.

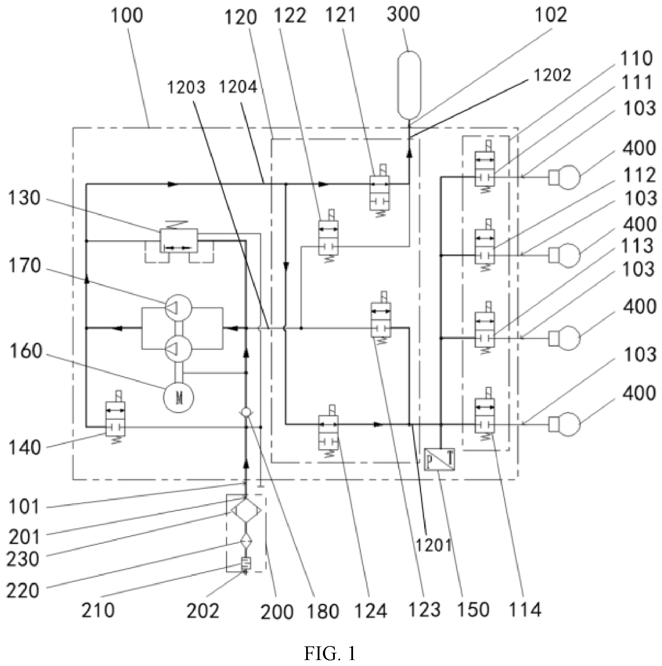

FIGS. 1 to 4 show an air suspension control system according to an embodiment of the present disclosure. As shown in FIGS. 1 to 4, the air suspension control system includes an air supply valve unit 100, an air filtration dryer 200, an air storage tank 300, and a plurality of air springs 400. The air supply valve unit 100 serves as an air passage mechanism of the air suspension control system, that is, the air supply valve unit 100 is configured to switch the airflow direction. The air supply valve unit 100 is provided with a first air port 101, a second air port 102, and a plurality of third air ports 103. The air filtration dryer 200 is configured to filter impurities and dry air entering the air suspension control system, and is provided with an air intake-and-exhaust nozzle 201 and an air intake-and-exhaust hole 202. In embodiments of the present disclosure, the air supply valve unit 100 integrates an air intake line and an air exhaust line of the system into one single air intake-and-exhaust line. The first air port 101 serves as an air intake-and-exhaust end of the air supply valve unit 100, and the first air port 101 is in communication with the air intake-and-exhaust nozzle 201. Such arrangement can not only reduce the number of lines and facilitate vehicle-level arrangement, but also ensure that air is dried before entering the air supply valve unit 100, thereby maintaining dryness inside the system and prolonging the service life of other components in the system. Meanwhile, during exhaust, the service life of the desiccant in the air filtration dryer can be improved through an air backflushing function, ensuring the drying effect of the air filtration dryer 200. The air storage tank 300 is configured to store filtered and dried air for use by the plurality of air springs 400 in the system. The second air port 102 is in communication with the air storage tank 300, so as to compress air supplemented via the air filtration dryer 200 into the air storage tank 300, or recover air from the plurality of air springs 400 into the air storage tank 300. The plurality of air springs 400 are connected to the plurality of third air ports 103 in a one-to-one correspondence. By charging or discharging air to or from each air spring 400, the height of the air spring 400 is changed, thereby adjusting the height or level of the vehicle body relative to the axle or the road surface.

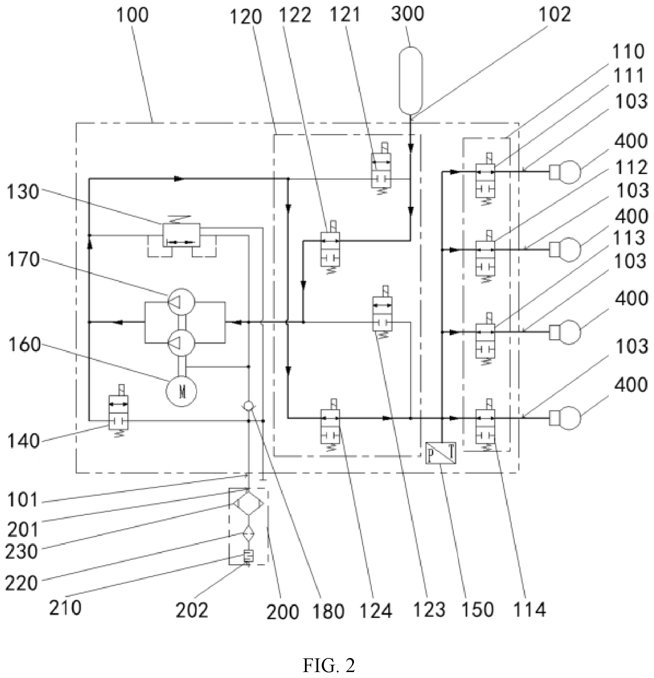

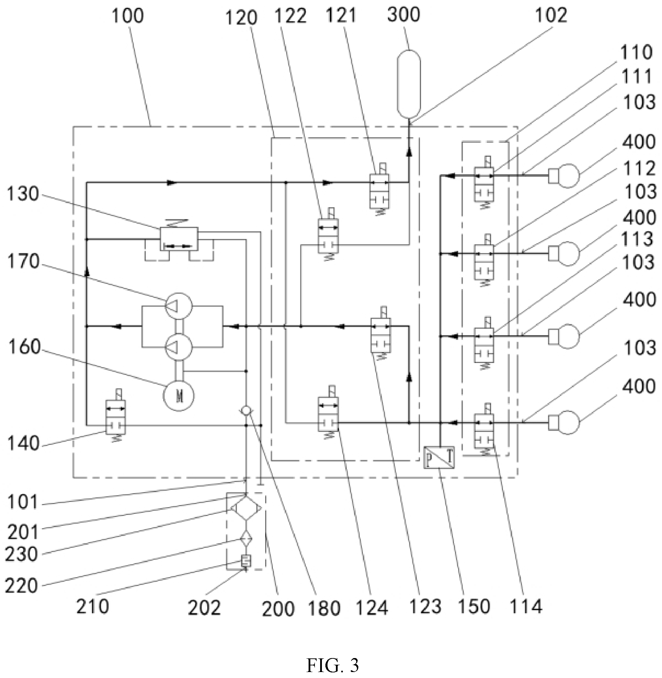

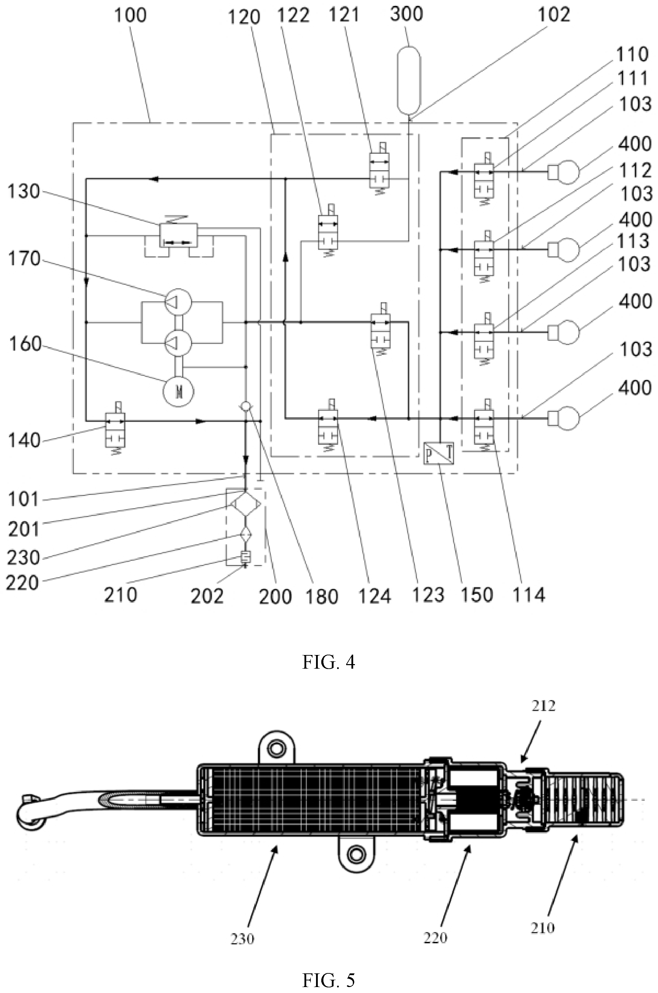

As shown in FIG. 1, when the air suspension control system is in an air intake state, internal valves of the air supply valve unit 100 are switched to connect the first air port 101 and the second air port 102 and close the plurality of third air ports 103. External air is drawn in through the air intake-and-exhaust hole 202 of the air filtration dryer 200, filtered and dried by the air filtration dryer 200, and then compressed into the air storage tank 300 through the one or more air passages of the air supply valve unit 100, completing system air replenishment. As shown in FIG. 2, when the air suspension control system is in a suspension lifting state, internal valves of the air supply valve unit 100 are switched to connect the second air port 102 and the plurality of third air ports 103 and close the first air port 101, and air in the air storage tank 300 is compressed into the plurality of air springs 400 through the one or more air passages of the air supply valve unit 100, lifting the plurality of air springs 400. As shown in FIG. 3, when the air suspension control system is in a suspension lowering state, internal valves of the air supply valve unit 100 are switched to connect the second air port 102 and the plurality of third air ports 103 and close the first air port 101, and air in the plurality of air springs 400 is pumped into the air storage tank 300 through the one or more air passages of the air supply valve unit 100, lowering the height of the plurality of air springs 400. As shown in FIG. 4, when the air suspension control system is in an air exhaust state, internal valves of the air supply valve unit 100 are switched to connect the first air port 101 and the plurality of third air ports 103 and close the second air port 102, and air in the plurality of air springs 400 is discharged to the external environment through the one or more air passages of the air supply valve unit 100 and the air filtration dryer 200.

In some embodiments, as shown in FIGS. 1 to 4, the air supply valve unit 100 may include an air supply valve group 110, a directional control valve group 120, a safety valve 130, an air exhaust valve 140, a sensor 150, and an air pump 170 driven by a motor 160. The air supply valve group 110 is configured to control on/off of air passages connected to the plurality of air springs 400. The directional control valve group 120 is configured to switch the flow direction of the overall air passage of the air supply valve unit 100. The plurality of air springs 400 are connected to a first air line 1201 of the directional control valve group 120 via the air supply valve group 110. The air storage tank 300 is connected to a second air line 1202 of the directional control valve group 120. An air-intake end of the air pump 170 is connected to a third air line 1203 of the directional control valve group 120. A fourth air line 1204 of the directional control valve group 120 is respectively connected to an air-outlet end of the air pump 170, a first end of the safety valve 130 and a first end of the air exhaust valve 140. The air intake-and-exhaust nozzle 201 of the air filtration dryer 200 is respectively connected to the air-intake end of the air pump 170, a second end of the safety valve 130, a second end of the air exhaust valve 140 and the third air line 1203 of the directional control valve group 120. The sensor 150 is arranged at an end of the air supply valve group 110 connected to the directional control valve group 120. In some implementations, the sensor 150 is at least one of a pressure sensor or a temperature sensor. The pressure sensor and the temperature sensor are configured to monitor pressure and temperature of the plurality of air springs 400 respectively and give an early warning in case of abnormality, so as to ensure overall operational safety of the system.

As shown in FIGS. 1 to 4, P and T of the sensor 150 shown in the figures represent a pressure sensor and a temperature sensor respectively. In some embodiments, one air spring 400 is arranged at each wheel of the vehicle, that is, four air springs 400 are provided. As shown in FIGS. 1 to 4, the air supply valve group 110 includes a first air supply valve 111, a second air supply valve 112, a third air supply valve 113, and a fourth air supply valve 114. The first air supply valve 111, the second air supply valve 112, the third air supply valve 113, and the fourth air supply valve 114 are in one-to-one correspondence with the four air springs 400 respectively. A first end of the first air supply valve 111, a first end of the second air supply valve 112, a first end of the third air supply valve 113, and a first end of the fourth air supply valve 114 are all connected to the first air line 1201 of the directional control valve group 120. A second end of the first air supply valve 111, a second end of the second air supply valve 112, a second end of the third air supply valve 113, and a second end of the fourth air supply valve 114 are respectively connected to their corresponding air springs 400.

In other embodiments, as shown in FIGS. 1 to 4, the directional control valve group 120 includes a first directional control valve 121, a second directional control valve 122, a third directional control valve 123, and a fourth directional control valve 124. The air storage tank 300 is in communication with a first end of the first directional control valve 121 and a first end of the second directional control valve 122. A second end of the first directional control valve 121 is respectively in communication with the air-outlet end of the air pump 170, the first end of the safety valve 130, and the first end of the air exhaust valve 140. A second end of the second directional control valve 122 and a first end of the third directional control valve 123 are both in communication with the air-intake end of the air pump 170, and are also in communication with the air intake-and-exhaust nozzle 201 of the air filtration dryer 200. A second end of the third directional control valve 123 and a first end of the fourth directional control valve 124 are respectively connected to the air supply valve group 110. A second end of the fourth directional control valve 124 is respectively in communication with the air-outlet end of the air pump 170, the first end of the safety valve 130, and the first end of the air exhaust valve 140. In some implementations, each of the first directional control valve 121, the second directional control valve 122, the third directional control valve 123, and the fourth directional control valve 124 is a two-position two-way solenoid valve. In some implementations, each of the first air supply valve 111, the second air supply valve 112, the third air supply valve 113, and the fourth air supply valve 114 is a two-position two-way solenoid valve.

As shown in FIGS. 1 to 4, a one-way valve 180 is arranged between the air filtration dryer 200 and the air-intake end of the air pump 170, the second end of the safety valve 130, the second end of the second directional control valve 122, and the first end of the third directional control valve 123, so as to prevent reverse air flow.

As shown in FIG. 1, when the air suspension control system is in the air intake state, the first directional control valve 121 and the fourth directional control valve 124 are energized and opened, the second directional control valve 122, the third directional control valve 123, the first air supply valve 111, the second air supply valve 112, the third air supply valve 113, the fourth air supply valve 114 and the air exhaust valve 140 are de-energized and closed, and the motor 160 is started. At this time, air passages of the first directional control valve 121 and the fourth directional control valve 124 are both open, air passages of the second directional control valve 122 and the third directional control valve 123 are both closed, and air passages of the air exhaust valve 140 and the air supply valve group 110 are also closed. The motor 160 drives the air pump 170 to draw external air in through the air intake-and-exhaust hole 202 of the air filtration dryer 200, and after being filtered and dried by the air filtration dryer 200, the air is compressed into the air storage tank 300 through the one or more air passages of the air supply valve unit 100, completing system air replenishment.

As shown in FIG. 2, when the air suspension control system is in the suspension lifting state, the second directional control valve 122, the fourth directional control valve 124, the first air supply valve 111, the second air supply valve 112, the third air supply valve 113, and the fourth air supply valve 114 are energized and opened, the first directional control valve 121, the third directional control valve 123 and the air exhaust valve 140 are de-energized and closed, and the motor 160 is started. At this time, air passages of the second directional control valve 122, the fourth directional control valve 124 and the air supply valve group 110 are all open, and air passages of the first directional control valve 121, the third directional control valve 123 and the air exhaust valve 140 are all closed. The motor 160 drives the air pump 170 to compress air in the air storage tank 300 into the four air springs 400 respectively through air passages of the first air supply valve 111, the second air supply valve 112, the third air supply valve 113 and the fourth air supply valve 114, thus lifting the air springs 400.

As shown in FIG. 3, when the air suspension control system is in the suspension lowering state, the first directional control valve 121, the third directional control valve 123, the first air supply valve 111, the second air supply valve 112, the third air supply valve 113, and the fourth air supply valve 114 are energized and opened, the second directional control valve 122, the fourth directional control valve 124 and the air exhaust valve 140 are de-energized and closed, and the motor 160 is started. At this time, air passages of the first directional control valve 121, the third directional control valve 123, the first air supply valve 111, the second air supply valve 112, the third air supply valve 113, and the fourth air supply valve 114 are all open, and air passages of the second directional control valve 122, the fourth directional control valve 124 and the air exhaust valve 140 are all closed. The motor 160 drives the air pump 170 to compress and recover air in the plurality of air springs 400 into the air storage tank 300 through the air passages of the air supply valve unit 100, thus lowering the height of the air springs 400.

As shown in FIG. 4, when the air suspension control system is in the air exhaust state, the fourth directional control valve 124, the first air supply valve 111, the second air supply valve 112, the third air supply valve 113, the fourth air supply valve 114 and the air exhaust valve 140 are energized and opened, the third directional control valve 123 may also be energized and opened, and the state of the third directional control valve 123 is not limited herein. The first directional control valve 121 and the second directional control valve 122 are de-energized and closed, and the motor 160 is started. At this time, since the internal air pressure of the system is higher than the external air pressure, air in the plurality of air springs 400 can be discharged to the external environment through the air passages of the air supply valve unit 100 and the air filtration dryer 200 when air passages of the third directional control valve 123, the fourth directional control valve 124, the air exhaust valve 140 and the air supply valve group 110 are all open and air passages of the first directional control valve 121 and the second directional control valve 122 are all closed.

Thick lines shown in FIGS. 1 to 4 represent open or air-conducting lines, and thin lines shown in FIGS. 1 to 4 represent closed and not-connecting lines. The representation of thick lines and thin lines is for ease of understanding the operation process of the air suspension control system in each state.

In some embodiments, the air filtration dryer 200 is separately arranged from the air supply valve unit 100 and the air storage tank 300 of the system, and can be connected to the air supply valve unit 100 via a hose, allowing the air filtration dryer 200 to be installed at different positions of the vehicle body without being restricted by installation space. This solves the problem in the related art that the integrated design of the desiccant and the air supply valve body results in an overlarge overall volume and inability to freely adjust the structural installation position, thereby achieving better adaptability and easier installation.

In some embodiments, as shown in FIGS. 1 to 4, the air filtration dryer 200 includes a silencing component 210, a filtration component 220, and a drying component 230 connected in sequence. A silencing element is arranged inside the silencing component 210, and the air intake-and-exhaust hole 202 is arranged at an end of the silencing component 210 facing away from the filtration component 220. A filter element is arranged inside the filtration component 220. A desiccant is arranged inside the drying component 230, and the air intake-and-exhaust nozzle 201 is arranged at an end of the drying component 230 facing away from the filtration component 220. External air drawn in through the air intake-and-exhaust hole 202 sequentially passes through the silencing element, the filter element, and the desiccant, and is then delivered to the air supply valve unit 100 through the air intake-and-exhaust nozzle 201, which not only filters impurities and dries the drawn external air, but also reduces noise during the air intake process. Similarly, air discharged from the air supply valve unit 100 enters the air filtration dryer 200 through the air intake-and-exhaust nozzle 201, sequentially passes through the desiccant, the filter element and the silencing element, and is then discharged to the external environment through the air intake-and-exhaust hole 202, and when the dry air passes through the desiccant, the dry air can absorb moisture from the desiccant and reduce the saturation of the desiccant, ensuring long-term use of the desiccant. and when passing through the filter element, the air can also carry away some impurities inside the filter element, prolonging the service life of the filter element. In addition, the air filtration dryer 200 can also reduce noise during air exhaust.

In some embodiments, the air filtration dryer 200 integrates drying, filtration, and silencing functions. The silencing component 210, the filtration component 220, and the drying component 230 connected in sequence of the air filtration dryer 200 are respectively provided with a silencing element, a filter element, and a desiccant, which not only realizes multiple functions of the air filtration dryer 200, but also effectively reduces noise during air intake and air exhaust of the air suspension system, featuring high integration.

As shown in FIG. 5, in embodiments of the present disclosure, a two-way valve 212 is further arranged between the silencing component 210 and the filtration component 220. In a non-operating state of the air filtration dryer 200, the two-way valve 212 blocks air communication between the silencing component 210 and the filtration component 220. In an air intake state of the air filtration dryer 200, the two-way valve 212 opens the air passage from the air intake-and-exhaust hole 202 to the air intake-and-exhaust nozzle 201. In an air exhaust state of the air filtration dryer 200, the two-way valve 212 opens the air passage from the air intake-and-exhaust nozzle 201 to the air intake-and-exhaust hole 202. The structure of the two-way valve 212 in embodiments of the present disclosure may be set according to actual needs, as long as the above functions of the two-way valve 212 may be realized.

In some embodiments, the two-way valve 212 may be arranged between the filtration component 220 and the drying component 230. The position of the two-way valve 212 in the embodiments of the present disclosure may be set according to actual needs.

In some embodiments, the two-way valve 212 can isolate the desiccant from air in the non-operating state, and at the same time enable the air passage between the silencing component 210 and the filtration component 220 to open during air intake and air exhaust, ensuring air communication among the three parts (namely the silencing component 210, the filtration component 220, and the drying component 230) of the air filtration dryer 200.

Embodiments of the present disclosure further provide a control method for an air suspension control system. The air suspension control system is the air suspension control system provided in the foregoing embodiments, with the same structure and principle as those of the foregoing embodiments. For brief description, reference may be made to corresponding content in the foregoing embodiments of the air suspension control system for parts not mentioned in the embodiment of the control method. Illustratively, with reference to FIGS. 1 to 4, the control method for the air suspension control system includes the following steps.

When the air suspension control system is in the air intake state, air passages of the first directional control valve 121 and the fourth directional control valve 124 of the air supply valve unit 100 are both open, air passages of the second directional control valve 122 and the third directional control valve 123 of the air supply valve unit 100 are both closed, and air passages of the air exhaust valve 140 and the air supply valve group 110 of the air supply valve unit 100 are both closed, the motor 160 of the air supply valve unit 100 drives the air pump 170 to draw external air in through the air intake-and-exhaust hole 202 of the air filtration dryer 200, and after being filtered and dried by the air filtration dryer 200, the air is compressed into the air storage tank 300 through the one or more air passages of the air supply valve unit 100, thus completing system air replenishment.

When the air suspension control system is in the suspension lifting state, the air passages of the second directional control valve 122 and the fourth directional control valve 124 of the air supply valve unit 100 are both open, the air passages of the first directional control valve 121 and the third directional control valve 123 of the air supply valve unit 100 are both closed, the air passage of the air exhaust valve 140 of the air supply valve unit 100 is closed, and the air passages of the air supply valve group 110 of the air supply valve unit 100 are all open, and the motor 160 drives the air pump 170 to compress air in the air storage tank 300 into the plurality of air springs 400 through the air passages of the air supply valve unit 100, thus lifting the air springs 400.

When the air suspension control system is in the suspension lowering state, the air passages of the first directional control valve 121 and the third directional control valve 123 of the air supply valve unit 100 are both open, the air passages of the second directional control valve 122 and the fourth directional control valve 124 of the air supply valve unit 100 are both closed, the air passage of the air exhaust valve 140 of the air supply valve unit 100 is closed, and the air passages of the air supply valve group 110 of the air supply valve unit 100 are all open, and the motor 160 drives the air pump 170 to pump air in the plurality of air springs 400 into the air storage tank 300 through the air passages of the air supply valve unit 100, thus lowering the height of the plurality of air springs 400.

When the air suspension control system is in the air exhaust state, the air passages of the third directional control valve 123 and the fourth directional control valve 124 of the air supply valve unit 100 are both open, the air passages of the first directional control valve 121 and the second directional control valve 122 of the air supply valve unit 100 are both closed, and the air passages of the air exhaust valve 140 and the air supply valve group 110 of the air supply valve unit 100 are both open, and air in the plurality of air springs 400 is discharged to the external environment through the air passages of the air supply valve unit 100 and the air filtration dryer 200.

In some embodiments, when the air suspension control system is in the air intake state, the air passage of the fourth directional control valve 124 of the air supply valve unit 100 is open, which may be used for the pressure sensor detecting and monitoring line pressure.

In some embodiments, when the air suspension control system is in the air exhaust state, the air passage of the third directional control valve 123 of the air supply valve unit 100 may alternatively be kept closed. Whether the one or more air passages of the air supply valve unit 100 is open can be set according to actual needs.

The present disclosure discloses an air suspension control system and a control method for an air suspension control system. An air intake line and an exhaust line of the air suspension are integrated into one single air intake-and-exhaust line, reducing the number of system lines and facilitating vehicle-level arrangement. Meanwhile, the air filtration dryer 200 is separately arranged from the air supply valve unit 100 and arranged at the air intake-and-exhaust end of the air supply valve unit 100, so that air is dried before entering the air supply valve unit 100, ensuring dryness inside the system, and the service life of the desiccant can be prolonged by using an air backflushing function.

The accompanying drawings are only schematic diagrams of some embodiments, and the modules or processes in the drawings are not necessarily essential for implementing the present disclosure. Modules in the apparatus in embodiments of the present disclosure may be distributed in the apparatus of embodiments as described in the embodiments, or may be correspondingly arranged in one or more apparatuses different from the present embodiments. The modules in the above embodiments may be combined into one module, or may be split into multiple sub-modules.

## Claims

1. An air suspension control system, comprising: an air supply valve unit, an air filtration dryer, an air storage tank, and a plurality of air springs, wherein the air supply valve unit has a first air port, a second air port, and a plurality of third air ports, the air filtration dryer has an air intake-and-exhaust nozzle and an air intake-and-exhaust hole, the air intake-and-exhaust nozzle is in communication with the first air port, the air storage tank is in communication with the second air port, and the plurality of air springs are connected to the plurality of third air ports in a one-to-one correspondence;
wherein in response to the air suspension control system being in an air intake state, the first air port and the second air port are in communication with each other and the plurality of third air ports are closed by switching internal valves of the air supply valve unit, so that external air is drawn in through the air intake-and-exhaust hole of the air filtration dryer, filtered and dried by the air filtration dryer, and compressed into the air storage tank through one or more air passages of the air supply valve unit to complete system air replenishment;
in response to the air suspension control system being in a suspension lifting state, the second air port and the plurality of third air ports are in communication with each other and the first air port is closed by switching the internal valves of the air supply valve unit, so that air in the air storage tank is compressed into the plurality of air springs through the one or more air passages of the air supply valve unit to lift the plurality of air springs;
in response to the air suspension control system being in a suspension lowering state, the second air port and the plurality of third air ports are in communication with each other and the first air port is closed by switching the internal valves of the air supply valve unit, so that air in the plurality of air springs is pumped into the air storage tank through the one or more air passages of the air supply valve unit to lower heights of the plurality of air springs; and
in response to the air suspension control system being in an air exhaust state, the first air port and the plurality of third air ports are in communication with each other and the second air port is closed by switching the internal valves of the air supply valve unit, so that air in the plurality of air springs is discharged to an external environment through the one or more air passages of the air supply valve unit and the air filtration dryer.

2. The air suspension control system according to claim 1, wherein the air supply valve unit comprises an air supply valve group, a directional control valve group, a safety valve, an air exhaust valve, a sensor and an air pump driven by a motor; the plurality of air springs are connected to a first air line of the directional control valve group via the air supply valve group, the air storage tank is connected to a second air line of the directional control valve group, an air-intake end of the air pump is connected to a third air line of the directional control valve group, and a fourth air line of the directional control valve group is respectively connected to an air-outlet end of the air pump, a first end of the safety valve and a first end of the air exhaust valve; the air intake-and-exhaust nozzle of the air filtration dryer is respectively connected to the air-intake end of the air pump, a second end of the safety valve, a second end of the air exhaust valve and the third air line of the directional control valve group; and the sensor is arranged at an end of the air supply valve group connected to the directional control valve group.

3. The air suspension control system according to claim 2, wherein the plurality of air springs comprise four air springs, and the air supply valve group comprises a first air supply valve, a second air supply valve, a third air supply valve and a fourth air supply valve; a first end of the first air supply valve, a first end of the second air supply valve, a first end of the third air supply valve and a first end of the fourth air supply valve are respectively connected to the first air line of the directional control valve group; and a second end of the first air supply valve, a second end of the second air supply valve, a second end of the third air supply valve and a second end of the fourth air supply valve are respectively connected to the four air springs in a one-to-one correspondence.

4. The air suspension control system according to claim 2, wherein the directional control valve group comprises a first directional control valve, a second directional control valve, a third directional control valve and a fourth directional control valve; the air storage tank is in communication with a first end of the first directional control valve and a first end of the second directional control valve; a second end of the first directional control valve is respectively in communication with the air-outlet end of the air pump, the first end of the safety valve and the first end of the air exhaust valve; a second end of the second directional control valve and a first end of the third directional control valve are respectively in communication with the air-intake end of the air pump, and are also respectively in communication with the air intake-and-exhaust nozzle of the air filtration dryer; a second end of the third directional control valve and a first end of the fourth directional control valve are respectively connected to the air supply valve group; and a second end of the fourth directional control valve is respectively in communication with the air-outlet end of the air pump, the first end of the safety valve and the first end of the air exhaust valve.

5. The air suspension control system according to claim 4, wherein each of the first directional control valve, the second directional control valve, the third directional control valve, and the fourth directional control valve is a two-position two-way solenoid valve.

6. The air suspension control system according to claim 4, wherein a one-way valve is arranged between the air filtration dryer and each of the air-intake end of the air pump, the second end of the safety valve, the second end of the second directional control valve, and the first end of the third directional control valve.

7. The air suspension control system according to claim 2, wherein the sensor is at least one of a pressure sensor or a temperature sensor.

8. The air suspension control system according to claim 1, wherein the air filtration dryer comprises a silencing component, a filtration component and a drying component connected in sequence; and a silencing element is arranged inside the silencing component, the air intake-and-exhaust hole is arranged at an end of the silencing component facing away from the filtration component, a filter element is arranged inside the filtration component, a desiccant is arranged inside the drying component, and the air intake-and-exhaust nozzle is arranged at an end of the drying component facing away from the filtration component; and
external air drawn in through the air intake-and-exhaust hole sequentially passes through the silencing component, the filtration component and the drying component, and is delivered to the air supply valve unit through the air intake-and-exhaust nozzle; air discharged from the air supply valve unit enters the air filtration dryer through the air intake-and-exhaust nozzle, sequentially passes through the drying component, the filtration component and the silencing component, and is discharged to the external environment through the air intake-and-exhaust hole.

9. The air suspension control system according to claim 8, wherein a two-way valve is arranged between the silencing component and the filtration component, and when the air filtration dryer is in a non-operating state, the two-way valve blocks air communication between the silencing component and the filtration component; and when the air filtration dryer is in an air intake state, the two-way valve opens an air passage from the air intake-and-exhaust hole to the air intake-and-exhaust nozzle; and when the air filtration dryer is in an air exhaust state, the two-way valve opens an air passage from the air intake-and-exhaust nozzle to the air intake-and-exhaust hole.

10. A control method for an air suspension control system, used in the air suspension control system according to any one of claims 1 to 9, and comprising:
in response to the air suspension control system being in the air intake state, opening both air passages of a first directional control valve and a fourth directional control valve of the air supply valve unit, closing both air passages of a second directional control valve and a third directional control valve of the air supply valve unit, closing both air passages of an air exhaust valve and an air supply valve group of the air supply valve unit, and driving by a motor of the air supply valve unit an air pump to draw external air in through the air intake-and-exhaust hole of the air filtration dryer, so that the external air is filtered and dried by the air filtration dryer and compressed into the air storage tank through the one or more air passages of the air supply valve unit to complete system air replenishment;
in response to the air suspension control system being in the suspension lifting state, opening both the air passages of the second directional control valve and the fourth directional control valve of the air supply valve unit, closing both the air passages of the first directional control valve and the third directional control valve of the air supply valve unit, closing the air passage of the air exhaust valve of the air supply valve unit, opening all the air passages of the air supply valve group of the air supply valve unit, and driving by the motor the air pump to compress air in the air storage tank into the plurality of air springs through the one or more air passages of the air supply valve unit to lift the plurality of air springs;
in response to the air suspension control system being in the suspension lowering state, opening both the air passages of the first directional control valve and the third directional control valve of the air supply valve unit, closing both the air passages of the second directional control valve and the fourth directional control valve of the air supply valve unit, closing the air passage of the air exhaust valve of the air supply valve unit, opening all the air passages of the air supply valve group of the air supply valve unit, and driving by the motor the air pump to pump air in the plurality of air springs into the air storage tank through the one or more air passages of the air supply valve unit to lower the heights of the plurality of air springs; and
in response to the air suspension control system being in the air exhaust state, opening both the air passages of the third directional control valve and the fourth directional control valve of the air supply valve unit, closing both the air passages of the first directional control valve and the second directional control valve of the air supply valve unit, and opening both the air passages of the air exhaust valve and the air supply valve group of the air supply valve unit, so that air in the plurality of air springs is discharged to the external environment through the one or more air passages of the air supply valve unit and the air filtration dryer.
